# EUROPEAN PATENT APPLICATION

(11) **EP 4 773 371 A1**
(43) Date of publication of application: **08.07.2026**
(21) Application number: 24858686.9
(22) Date of filing: 29.08.2024
(51) Int. Cl.: H01M 50/244, H01M 50/242, H01M 50/30, H01M 50/358

(54) **BATTERY PACK, BATTERY PACK ASSEMBLY, AND POWER DEVICE**

(30) Priority: 29.08.2023 CN 202322327067 U; 29.08.2023 CN 202322346107 U; 29.08.2023 CN 202322327044 U
(71) Applicant: SVOLT Energy Technology Co., Ltd., Changzhou, Jiangsu 213200 (CN)
(72) Inventor: CHENG, Chuansheng, hangzhou, Jiangsu 213200 (CN); QU, Fanduo, hangzhou, Jiangsu 213200 (CN); ZHAO, Xiangyang, hangzhou, Jiangsu 213200 (CN)
(74) Representative: Michalski Hüttermann & Partner mbB
(86) International application number: PCT/CN2024/115592
(87) International publication number: WO 2025/045155

(57) **Abstract**

The present application discloses a battery pack, a battery pack assembly, and a power unit. The battery pack includes: a battery housing, wherein a battery module is mounted in the battery housing, and a bottom of the battery module is provided with an explosion-proof valve; a bottom protection plate assembly, including a bottom protection plate component and an explosion-proof valve protection member, wherein the bottom protection plate component is connected to a bottom of the battery housing, the explosion-proof valve protection member is supported between the bottom protection plate component and the battery module, the explosion-proof valve protection member is provided with a hollow cavity and an exhaust hole, the exhaust hole is arranged directly opposite to the explosion-proof valve, the exhaust hole is communicated with at least a part of the hollow cavity, and at least a part of the hollow cavity is adapted to communicate with an external space of the battery pack. In the battery pack according to an embodiment of the present application, the explosion-proof valve can be arranged downwards, the bottom protection plate assembly is arranged to protect the battery pack to a certain extent, thus improving a bottom protection performance of the battery pack, and the explosion-proof valve and the exhaust hole are arranged to discharge generated gas, thus reducing a probability of thermal runaway.

## Description

### CROSS-REFERENCE TO RELATED APPLICATION

The present disclosure claims priority to Chinese Patent Application No. 202322327044.2, entitled "Battery Pack", filed with China National Intellectual Property Administration on August 29, 2023, Chinese Patent Application No. 202322327067.3, entitled "Battery Pack", filed with China National Intellectual Property Administration on August 29, 2023, and Chinese Patent Application No. 202322346107.9, entitled "Battery Pack Assembly and Power Unit", filed with China National Intellectual Property Administration on August 29, 2023, the entire contents of which are incorporated herein by reference.

### TECHNICAL FIELD

The present disclosure relates to the technical field of batteries, and particularly to a battery pack, a battery pack assembly, and a power unit.

### BACKGROUND ART

Currently, an electric vehicle becomes a frequently chosen mode of transportation for people daily travel. During running of the electric vehicle, various complex working conditions may occur, and in order to improve a capability of a battery pack to cope with various working conditions, structural strength of the battery pack needs to be improved, and a design manner of a structure of the battery pack directly influences the overall structural strength and an overall safety performance of the battery pack. The current battery pack has various arrangement forms, and basically, a cell electrode is upward, and an explosion-proof valve is upward; or the cell electrode faces one side or two sides, and the explosion-proof valve and the electrode face the same side. The two arrangements of a cell are relatively common, but still not perfect enough in terms of improving overall energy density of the battery pack and preventing thermal runaway of the cell, and also not perfect enough in terms of vibration performance and bottom protection of the battery pack, and there is room for improvement.

With a focus on safety performances and energy, structural forms of the battery pack are diversified, and with a continuous increase of the energy density of the battery pack, a highly-integrated battery pack structure becomes particularly important.

### SUMMARY

The present disclosure aims to solve at least one of the technical problems existing in the prior art. To this end, the present disclosure provides a battery pack, which can realize a downward arrangement of an explosion-proof valve, improve a bottom protection performance by providing a bottom protection plate component, and reduce the risk of thermal runaway by providing an exhaust hole in an explosion-proof valve protection member.

A battery pack according to an embodiment of the present disclosure includes: a battery housing, wherein a battery module is mounted in the battery housing, and a bottom of the battery module is provided with an explosion-proof valve; a bottom protection plate assembly, wherein the bottom protection plate assembly includes a bottom protection plate component and an explosion-proof valve protection member, the bottom protection plate component is connected to a bottom of the battery housing, the explosion-proof valve protection member is supported between the bottom protection plate component and the battery module, the explosion-proof valve protection member is provided with a hollow cavity and an exhaust hole, the exhaust hole is arranged directly opposite to the explosion-proof valve, the exhaust hole is communicated with at least a part of the hollow cavity, and at least a part of the hollow cavity is adapted to communicate with an external space of the battery pack.

In the battery pack according to the embodiment of the present disclosure, by providing the bottom protection plate assembly at the bottom of the battery housing, an impact force can be effectively absorbed by cooperation of the explosion-proof valve protection member and the bottom protection plate component, so that the explosion-proof valve and the battery module can be protected, and integral structural strength of a bottom of the battery pack is improved. By providing the explosion-proof valve at the bottom of the battery module, exhausting can be performed by the hollow cavity in the explosion-proof valve protection member, it is not required to provide an exhaust passage at a top or a side of the battery module as in a conventional battery pack, an internal compact design is realized, and an increase of energy density of the battery pack is facilitated. Meanwhile, the exhaust hole and the hollow cavity in the explosion-proof valve protection member can rapidly discharge internal gas in time, thus reducing a probability of thermal runaway and further improving safety of the whole battery pack.

In the battery pack according to an embodiment of the present disclosure, the hollow cavity includes an exhaust cavity and a functional cavity, the exhaust hole is formed in a top wall of the exhaust cavity, the exhaust cavity is adapted to communicate with the external space of the battery pack, and the functional cavity and the exhaust cavity are configured in a such way that side walls are connected and inner cavities are separated.

In the battery pack according to an embodiment of the present disclosure, the functional cavity includes at least two first sub-cavities and a second sub-cavity, the second sub-cavity is located between adjacent first sub-cavities, and the first sub-cavities are connected with the exhaust cavity.

In the battery pack according to an embodiment of the present disclosure, a vertical depth in the first sub-cavities is smaller than that of the second sub-cavity, and/or the vertical depth of the second sub-cavity is the same as that of the exhaust cavity.

In the battery pack according to an embodiment of the present disclosure, side walls of the second sub-cavity and/or the exhaust cavity are configured as inclined reinforcing plates.

In the battery pack according to an embodiment of the present disclosure, the reinforcing plate includes an upper sub-plate and a lower sub-plate, an included angle is formed between the upper sub-plate and the lower sub-plate, and the included angle between the upper sub-plate and a vertical direction is the same as that between the lower sub-plate and the vertical direction.

In the battery pack according to an embodiment of the present disclosure, a buffer member is arranged between a bottom of the first sub-cavities and/or the second sub-cavity and the bottom protection plate component.

In the battery pack according to an embodiment of the present disclosure, the functional cavity is provided with a buffer material or a cooling medium.

In the battery pack according to an embodiment of the present disclosure, multiple battery modules are provided, multiple explosion-proof valve protection members are provided and supported at the bottoms of the plural battery modules in a one-to-one correspondence manner, and a support member is connected between two adjacent explosion-proof valve protection members.

In the battery pack according to an embodiment of the present disclosure, a plurality of reinforcing cavities are formed in a side wall of the battery housing.

The present disclosure aims to solve at least one of the technical problems existing in the prior art. To this end, another objective of the present disclosure is to provide a battery pack, which greatly improves and enhances a bottom protection performance for a downward cell explosion-proof valve.

A battery pack according to an embodiment of the present disclosure includes: a battery housing, wherein a battery module is mounted in the battery housing, and a bottom of the battery module is provided with an explosion-proof valve; and a bottom protection plate assembly, wherein the bottom protection plate assembly includes a bottom protection plate component and an explosion-proof valve protection plate, the bottom protection plate component is connected to a bottom of the battery housing, the explosion-proof valve protection plate is mounted on the bottom protection plate component, the explosion-proof valve protection plate includes a support region and an avoidance region, the support region is suitable for supporting a bottom wall of the battery module, and the avoidance region is arranged directly opposite to the explosion-proof valve.

In the battery pack according to the embodiment of the present disclosure, the explosion-proof valve of the battery pack is arranged at the bottom of the battery module, the explosion-proof valve protection plate is arranged at the bottom of the battery module, the explosion-proof valve protection plate includes a support region and an avoidance region, the support region is connected with the battery module to support the battery module, the avoidance region is arranged directly opposite to the explosion-proof valve to protect the explosion-proof valve, and meanwhile, the avoidance region also provides a passage for gas discharging during thermal runaway of the battery module.

In the battery pack according to the embodiment of the present disclosure, the explosion-proof valve protection plate is configured as a corrugated plate, the explosion-proof valve protection plate is provided with a buffer groove in one side of the support region facing the bottom protection plate component, and the explosion-proof valve protection plate is provided with an avoidance groove in one side of the avoidance region facing the battery module.

In the battery pack according to the embodiment of the present disclosure, a side wall between the avoidance groove and the buffer groove is provided with an exhaust hole, the avoidance groove forms a first exhaust passage communicated with the explosion-proof valve, the buffer groove is provided therein with a second exhaust passage, and the second exhaust passage is communicated with the first exhaust passage through the exhaust hole.

In the battery pack according to the embodiment of the present disclosure, multiple support regions and multiple avoidance regions are provided, and the multiple support regions and the multiple avoidance regions are alternately distributed on the explosion-proof valve protection plate.

In the battery pack according to the embodiment of the present disclosure, the buffer groove is provided therein with a buffer member.

In the battery pack according to the embodiment of the present disclosure, the bottom protection plate assembly further includes a middle support member, at least two battery modules are provided, at least two explosion-proof valve protection plates are provided and mounted at the bottoms of the at least two battery modules in a one-to-one correspondence manner, and the middle support member is connected between adjacent explosion-proof valve protection plates.

In the battery pack according to the embodiment of the present disclosure, end portions of the two adjacent battery modules are spaced apart and respectively supported on two side edges of the middle support member.

In the battery pack according to the embodiment of the present disclosure, the bottom protection plate assembly further includes a side support member, the side support member includes a support plate and a connecting plate that are connected in a bent manner, the support plate is supported at the bottom of the battery module, and the connecting plate is located on a side part of the battery module and connected with an inner side wall of the battery housing.

In the battery pack according to the embodiment of the present disclosure, a buffer cavity is formed in a side wall of the battery housing, and a first reinforcing member is arranged in the buffer cavity; and/or, a hollow reinforcing structure is further arranged outside the battery housing, and a second reinforcing member is arranged in the reinforcing structure.

The battery pack according to the embodiment of the present disclosure further includes a liquid cooling plate, wherein the liquid cooling plate is mounted at an upper portion of the battery housing and connected with the battery module, an annular reinforcing flange is formed on the liquid cooling plate, and the annular reinforcing flange is connected with the battery housing.

The present disclosure aims to solve at least one of the technical problems existing in the prior art. To this end, another objective of the present disclosure is to provide a battery pack assembly which can ensure a safe performance and reduce the risk of a runaway.

The present disclosure further provides a power unit with the above battery pack assembly.

A battery pack assembly according to the present disclosure includes: a cell, wherein an explosion-proof valve is formed at a bottom end of the cell; a support member, wherein a first exhaust passage arranged directly opposite to the explosion-proof valve is formed in the support member; and a bottom protection plate, wherein the bottom protection plate is arranged at one side of the support member away from the cell and fixedly connected with the support member, a second exhaust passage is formed in one side of the bottom protection plate facing the support member, and the first exhaust passage is communicated with the second exhaust passage.

The battery pack assembly according to the present disclosure includes the first exhaust passage and the second exhaust passage, so that when a battery is subjected to thermal runaway, the explosion-proof valve can timely exhaust gas in the battery, and the exhausted gas can sequentially pass through the first exhaust passage and the second exhaust passage to be discharged outside, thereby effectively reducing a temperature and a pressure in the battery pack assembly, ensuring a safety performance of the battery pack assembly, and reducing the risk of runaway of the battery pack assembly.

In some embodiments of the present disclosure, the support member includes: a first support portion, wherein the first support portion is arranged directly opposite to the cell and fixedly connected with the cell; and a second support portion, wherein the second support portion is arranged directly opposite to the explosion-proof valve and fixedly connected with the first support portion, wherein the first exhaust passage is formed in the second support portion.

In some embodiments of the present disclosure, the second support portion includes: a bottom plate; side plates, wherein the side plates are arranged on two sides of the bottom plate in a first direction and extend in a direction away from the bottom plate; and an overlapping edge, wherein the overlapping edge is arranged at a free end of the side plates and extends in a direction away from each other, the overlapping edge is fixedly connected with the first support portion, and the bottom plate, the side plates, and the overlapping edge define the first exhaust passage.

In some embodiments of the present disclosure, the battery pack assembly further includes: a first buffer member and a second buffer member, wherein the first buffer member and the second buffer member are respectively located between the bottom protection plate and the support member and fixedly connected with the bottom protection plate and the support member, the first buffer member is arranged directly opposite to the first support portion, and the second buffer member is arranged directly opposite to the overlapping edge.

In some embodiments of the present disclosure, multiple cells are provided, the explosion-proof valve of the multiple cells is arranged at intervals in a second direction, the second direction is orthogonal to the first direction, and the first exhaust passage extends in the second direction.

In some embodiments of the present disclosure, the bottom protection plate is provided with a plurality of mounting grooves, the mounting grooves are adapted to accommodate the support member, and the second exhaust passage is formed between a bottom wall of the mounting grooves and the support member.

In some embodiments of the present disclosure, reinforcing ribs protruding towards the support member are formed in the mounting grooves, and multiple reinforcing ribs are provided and arranged at intervals in the first direction and the second direction respectively.

In some embodiments of the present disclosure, the battery pack assembly further includes: an insulation member, wherein the insulation member is arranged between the second support portion and the cells and fixedly bonded to the second support portion.

In some embodiments of the present disclosure, the battery pack assembly further includes: a liquid cooling plate, wherein the liquid cooling plate is arranged at a top end of the cell and connected with the cells, and a flow channel suitable for the flow of cooling liquid is formed in the liquid cooling plate.

The power unit according to the present disclosure is briefly described below.

A power unit according to the present disclosure is provided with the battery pack assembly according to the above embodiment. Since the power unit according to the present disclosure is provided with the battery pack assembly according to the above embodiment, when the cell is subjected to thermal runaway in the power unit, the explosion-proof valve can timely exhaust the gas in the battery pack assembly, and the exhausted gas can sequentially pass through the first exhaust passage and the second exhaust passage to be discharged outside, thereby effectively reducing the pressure in the battery pack assembly, reducing the risk of runaway of the battery pack assembly, and ensuring the safety performances of the battery pack assembly and the power unit.

Additional aspects and advantages of the present disclosure will be set forth in part in the following description and in part will become apparent from the following description, or will be learned from the practice of the present disclosure.

### BRIEF DESCRIPTION OF DRAWINGS

The above and/or additional aspects and advantages of the present disclosure will become apparent and more readily appreciated from the following descriptions of the embodiments made with reference to the drawings, in which:
FIG. 1 is a schematic structural diagram of a battery pack according to an embodiment of the present disclosure;
FIG. 2 is a schematic structural diagram of an explosion-proof valve, an explosion-proof valve protection member, and a bottom protection plate of the battery pack according to the embodiment of the present disclosure;
FIG. 3 is a schematic structural diagram of the explosion-proof valve protection member of the battery pack according to the embodiment of the present disclosure;
FIG. 4 is a schematic sectional diagram of A in FIG. 3;
FIG. 5 is a schematic diagram of sizes of parts of the explosion-proof valve protection member according to the embodiment of the present disclosure;
FIG. 6 is an exploded view of the battery pack according to the embodiment of the present disclosure;
FIG. 7 is a partial exploded view of the battery pack according to the embodiment of the present disclosure;
FIG. 8 is a partial exploded view of the battery pack according to the embodiment of the present disclosure without a battery housing;
FIG. 9 is a top view of the battery pack according to the embodiment of the present disclosure;
FIG. 10 is a sectional view of the battery pack according to the embodiment of the present disclosure taken along A-A in FIG. 4;
FIG. 11 shows a partial structure of FIG. 5 in the embodiment of the present disclosure;
FIG. 12 is a schematic structural diagram of a battery pack assembly according to an embodiment of the present disclosure;
FIG. 13 is a schematic structural diagram of some components of the battery pack assembly in FIG. 12;
FIG. 14 is a schematic structural diagram of a bottom protection plate of the battery pack assembly in FIG. 12;
FIG. 15 is a schematic structural diagram of a part of the bottom protection plate of the battery pack assembly in FIG. 12; and
FIG. 16 is a schematic structural diagram of a bottom protection plate in a second embodiment of the present disclosure.

Reference numerals:
battery pack 100;
battery housing 1; battery module 11; liquid cooling plate 12; bottom protection plate assembly 2; bottom protection plate component 21; bottom protection plate coating 211; bottom protection plate 212; explosion-proof valve protection member 22; exhaust hole 221; hollow cavity 222; exhaust cavity 2221; functional cavity 2222; first sub-cavity 2223; second sub-cavity 2224; explosion-proof valve 3; buffer member 4;
battery pack 200;
battery module 201; explosion-proof valve 202; structural adhesive 203;
explosion-proof valve protection plate 204; support region 41; avoidance region 42; exhaust hole 43; insulation plate 44;
buffer member 5; middle support member 6; side support member 7; support plate 71; connecting plate 72;
box side wall 8; buffer cavity 81; first reinforcing member 811; reinforcing structure 82; second reinforcing member 821;
bottom protection plate component 9; bottom protection plate 91; bottom protection plate coating 911; inspection cover 92; inspection cover coating 921; thermally conductive structural adhesive 10; liquid cooling plate 2011; annular reinforcing flange 111; 300: battery pack assembly; 110: cell; 111: explosion-proof valve; 120: support member; 121: first exhaust passage; 122: first support portion; 1221: extension portion; 123: second support portion; 1231: bottom plate; 1232: side plate; 1233: overlapping edge; 130: bottom protection plate; 131: second exhaust passage; 132: bottom protection plate coating; 133: mounting beam; 134: mounting groove; 135: bottom wall; 136: reinforcing rib; 140: first buffer member; 150: second buffer member; 160: insulation member; 170: liquid cooling plate; 171: flow channel; 101: adhesive layer.

### DETAILED DESCRIPTION OF EMBODIMENTS

Embodiments of the present disclosure are described in detail below, examples of which are illustrated in the accompanying drawings, wherein the same or similar reference numerals refer to the same or similar elements or elements having the same or similar functions throughout. The embodiments described below with reference to the accompanying drawings are exemplary and merely used to explain the present disclosure and should not be construed as limiting the present disclosure.

In descriptions of the present disclosure, it should be understood that directions or positional relationships indicated by terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" etc., are based on orientations or positional relationships shown in the accompanying drawings, and they are used only for describing the present disclosure and for description simplicity, but do not indicate or imply that an indicated device or element must have a specific orientation or be constructed and operated in a specific orientation. Therefore, it cannot be understood as a limitation on the present disclosure. Furthermore, the feature defined with "first" and "second" can include one or more of these features explicitly or implicitly. In the description of the present disclosure, "a plurality of" means two or more unless otherwise stated.

In the description of the present disclosure, it should be noted that unless specified or limited otherwise, the terms "mount", "connect", and "link" and the like are used broadly, and can be, for example, fixed connections, detachable connections, or integral connections; can also be mechanical or electrical connections; can also be direct connections or indirect connections via intervening structures; can also be inner communications of two components. The specific meanings of the above terms in the present disclosure can be understood by those of ordinary skill in the art according to specific cases.

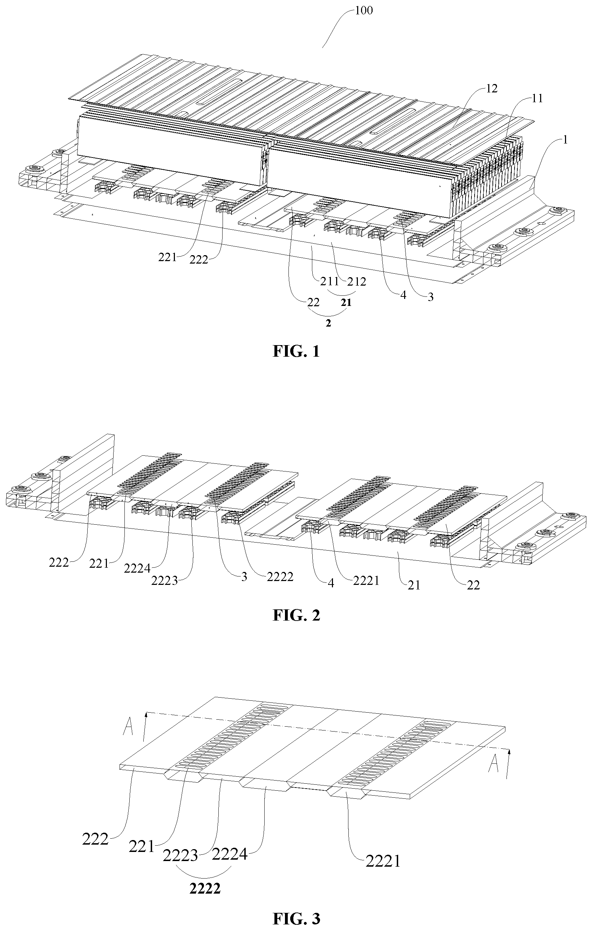

A battery pack 100 according to an embodiment of the present disclosure is described below with reference to FIGS. 1 to 5, in which an explosion-proof valve 3 is arranged at a bottom of a battery module 11, and an exhaust hole 221 is formed in an explosion-proof valve protection member 22 to exhaust internal gas, thereby reducing a probability of thermal runaway; and meanwhile, a bottom protection plate component 21 is arranged to protect the battery module 11 and the explosion-proof valve 3, thereby improving a protection performance of a bottom protection plate.

As shown in FIGS. 1 to 5, the battery pack 100 according to an embodiment of the present disclosure includes: a battery housing 1 and a bottom protection plate assembly 2.

The battery module 11 is mounted in the battery housing 1, and it should be noted that the bottom protection plate assembly 2 in the present disclosure is mounted at a bottom of the battery housing 1, the battery housing 1 can be configured into an annular frame structure with an open top and an open bottom, and the bottom protection plate assembly 2 is configured to protect and seal the bottom of the battery housing 1. The bottom of the battery module 11 is provided with the explosion-proof valve 3, and the explosion-proof valve 3 is configured to release a pressure of the battery module 11. During actual designing, a plurality of explosion-proof valves 3 can be arranged at the bottom of the battery module 11 to be correspondingly matched with a plurality of cells in the battery module 11 respectively, so that when any cell is subjected to thermal runaway and catches fire, pressure relief and exhausting can be performed through the corresponding explosion-proof valve 3, thereby avoiding that the internal gas pressure of the battery module 11 is excessively large and causes large-range thermal runaway.

A cover plate can be arranged at a top of the battery housing 1 to cover and seal the top thereof, for example, the cover plate can be configured as a liquid cooling plate 12, so that the liquid cooling plate 12 can be configured to seal the battery housing 1 and also rapidly cool the battery module 11.

The bottom protection plate assembly 2 includes the bottom protection plate component 21 and the explosion-proof valve protection member 22, the bottom protection plate component 21 is connected to the bottom of the battery housing 1, and a connecting manner of the bottom protection plate component 21 and the battery housing 1 can be gluing, double-sided local gum application, or the like, thus increasing connection strength of the bottom protection plate 212 and the battery housing 1, and then enhancing overall rigidity of the battery pack 100. Specifically, the bottom protection plate component 21 can include a bottom protection plate coating 211 and the bottom protection plate 212, and all the parts of the bottom protection plate assembly 2 can integrally form a sandwich structure in a gluing manner, a double-sided local gum application manner, or the like, so as to improve the overall structural rigidity. The bottom protection plate 212 can be made of high-strength steel, such as HC340/590DP and higher-strength steel, or made of thermally-formed steel, or the like.

The explosion-proof valve protection member 22 is supported between the bottom protection plate component 21 and the battery module 11, and thus, the explosion-proof valve protection member 22 is located below the battery module 11 and the explosion-proof valve 3, so that the explosion-proof valve protection member 22 and the bottom protection plate assembly 2 can jointly protect the battery module 11 and the explosion-proof valve 3, and then, overall protection is formed at a bottom of the battery pack 100, an impact force can be absorbed effectively, and bottom safety of the battery pack 100 is improved.

The explosion-proof valve protection member 22 is provided with a hollow cavity 222 and the exhaust hole 221, the exhaust hole 221 is arranged directly opposite to the explosion-proof valve 3, the exhaust hole 221 is communicated with at least a part of the hollow cavity 222, and at least a part of the hollow cavity 222 is adapted to communicate with an external space of the battery pack. That is, the exhaust hole 221 can be formed under the explosion-proof valve 3, so that gas flow at the explosion-proof valve 3 can enter downwards into the exhaust hole 221, then enter at least a part of the hollow cavity 222 from the exhaust hole 221, and be exhausted towards the external space of the battery pack 100 through the hollow cavity 222. Thus, when a pressure or a temperature inside the battery pack 100 is excessively high and the explosion-proof valve 3 is opened, the internal high pressure or high temperature gas can enter the exhaust hole 221 fast and then is discharged out of the battery pack 100 from the hollow cavity, thus reducing a thermal diffusion risk and improving the safety of the battery pack 100. Since the explosion-proof valve 3 is arranged at the bottom of the battery module 11, it is not required to provide an independent exhaust space on a side or a top of the battery module 11, and exhausting can be performed using the hollow cavity 222 formed inside the explosion-proof valve protection member 22, thus realizing a compact design in the battery pack 100, and facilitating an increase of energy density of the battery pack 100.

At least a part of the hollow cavity 222 is adapted to communicate with the external space of the battery pack 100. In other words, the hollow cavity 222 can be an integral cavity, and the integral cavity is completely communicated with the external space of the battery pack 100, so that the internal high temperature and high pressure gas can enter the hollow cavity 222 to be exhausted. Alternatively, the hollow cavity 222 can be configured to include a plurality of sub-cavities which are separated from each other. One sub-cavity is communicated with the exhaust hole 221, the gas at the exhaust hole 221 can be exhausted to the external space of the battery pack through the sub-cavity, the other sub-cavities can be configured to achieve buffering, cooling, or other functions, and a structural arrangement is flexible.

In the battery pack 100 according to the embodiment of the present disclosure, by providing the bottom protection plate assembly 2 at the bottom of the battery housing 1, an impact force can be effectively absorbed by cooperation of the explosion-proof valve protection member 22 and the bottom protection plate component 21, so that the explosion-proof valve 3 and the battery module 11 can be protected, and the integral structural strength of the bottom of the battery pack 100 is improved. By providing the explosion-proof valve 3 at the bottom of the battery module 11, exhausting can be performed by the hollow cavity 222 in the explosion-proof valve protection member 22, it is not required to provide an exhaust passage at the top or the side of the battery module 11 as in a conventional battery pack 100, an internal compact design is realized, and an increase of the energy density of the battery pack 100 is facilitated. Meanwhile, the exhaust hole 221 and the hollow cavity 222 in the explosion-proof valve protection member 22 can rapidly discharge the internal gas in time, thus reducing a probability of thermal runaway and further improving the safety of the whole battery pack 100.

In some embodiments, the hollow cavity 222 includes an exhaust cavity 2221 and a functional cavity 2222, the exhaust hole 221 is formed in a top wall of the exhaust cavity 2221, the exhaust cavity 2221 is adapted to communicate with the external space of the battery pack 100, and the functional cavity 2222 and the exhaust cavity 2221 are configured in a such way that side walls are connected and inner cavities are separated. That is, the exhaust cavity 2221 is configured to be communicated with the external space of the battery pack 100 to achieve the purpose of exhausting the gas generated inside the battery pack 100, so as to reduce the risk of thermal runaway of the battery pack 100, the functional cavity 2222 is separated from the exhaust cavity 2221 and configured to achieve a function different from exhausting, and the functions thereof do not interfere with each other, thus facilitating enrichment of functions of the explosion-proof valve protection member 22 and satisfying different use requirements.

During actual designing, the side wall of the functional cavity 2222 and the side wall of the exhaust cavity 2221 are connected to each other, so that the hollow cavity 222 is a whole, and an internal structure is relatively neat. Meanwhile, the inner cavity of the functional cavity 2222 and the inner cavity of the exhaust cavity 2221 are two independent cavities which are completely separated, thus ensuring that the functions of the functional cavity and the exhaust cavity are independent from each other and do not interfere with each other. Specifically, the functional cavity 2222 can be configured according to different requirements of a user during use. It can be directly configured as an empty cavity, or a buffer energy absorbing material can be placed inside the functional cavity 2222 to buffer an external force, so as to improve the safety of the battery pack 100, or a cooling medium can be directly filled in the functional cavity 2222, so as to cool a lower portion of the battery module 11, improve a cooling effect, and prolong a service life of the battery pack 100.

Therefore, the user can flexibly set the function of the functional cavity 2222 according to different requirements during specific use, the functional cavity can be directly configured as the empty cavity, or be configured into a liquid cooling structural form capable of cooling the battery module 11, and the setting form is not unique, which facilitates the battery pack 100 to be applied to different working conditions, and increases an application range of the battery pack 100. In addition, an insulating sheet, or the like, can be pasted to the exhaust cavity 2221 to insulate the exhaust cavity 2221 from the internal medium.

Exemplarily, as shown in FIG. 2, the function cavities 2222 and the exhaust cavities 2221 are sequentially distributed in a length direction of the explosion-proof valve protection member 22, the exhaust cavities 2221 are located under the explosion-proof valves 3, the other cavities are function cavities 2222, and a number of the provided exhaust cavities 2221 corresponds to that of the explosion-proof valves 3. For example, if two sets of explosion-proof valves 3 are provided, two sets of exhaust cavities 2221 are provided.

In some embodiments, the functional cavity 2222 includes at least two first sub-cavities 2223 and a second sub-cavity 2224, the second sub-cavity 2224 is located between adjacent first sub-cavities 2223, and the first sub-cavities 2223 are connected with the exhaust cavity 2221. That is, the functional cavity 2222 further includes the plurality of first sub-cavities 2223 and the second sub-cavity 2224, wherein multiple first sub-cavities 2223 are provided. The first sub-cavities 2223 are directly connected with the exhaust cavity 2221, and the second sub-cavities 2224 are separated from the exhaust cavity 2221 through the first sub-cavities 2223. That is, a number of the first sub-cavities 2223 is no less than two, and the second sub-cavity 2224 or the exhaust cavity 2221 is located between adjacent first sub-cavities 2223.

Exemplarily, as shown in FIGS. 1 to 2, each explosion-proof valve protection member 22 is provided with one second sub-cavity 2224, two exhaust cavities 2221 and four first sub-cavities 2223 which are distributed alternately in the length direction of the explosion-proof valve 3. During actual designing, an inner cavity of the first sub-cavity 2223 can be separated from an inner cavity of the second sub-cavity 2224, so that the two sub-cavities form mutually independent cavities, thereby achieving different effects and enriching functions of the explosion-proof valve protection member 22. Thus, the whole explosion-proof valve protection member 22 can have a harmonica-like structure.

In some embodiments, a vertical depth in the first sub-cavity 2223 is smaller than that of the second sub-cavity 2224, and/or the vertical depth of the second sub-cavity 2224 is the same as that of the exhaust cavity 2221. That is, the vertical depth of the second sub-cavity 2224 and the vertical depth of the exhaust cavity 2221 can be set to be the same and both greater than the vertical depth of the first sub-cavity 2223. It can be understood that the explosion-proof valve protection member 22 is located at the bottom of the battery module 11, an upper surface of the explosion-proof valve protection member 22 can be attached to a lower surface of the battery module 11, and the upper surface of the explosion-proof valve protection member 22 is entirely flush. That is, the second sub-cavity 2224 and the exhaust cavity 2221 both protrude downwards from the first sub-cavity 2223. In other words, the second sub-cavity 2224 and the exhaust cavity 2221 can be supported on and contact the bottom protection plate component 21 earlier than the first sub-cavity 2223 during actual mounting.

Therefore, during actual designing, both the second sub-cavity 2224 and the exhaust cavity 2221 can be configured to be in abutting contact with the bottom protection plate component 21, the first sub-cavity 2223 is spaced apart from the bottom protection plate component 21, and therefore, the second sub-cavity 2224 can be configured as the empty cavity or the buffer cavity with the buffer material, so that the second sub-cavity 2224 and the exhaust cavity 2221 can be collapsed and deformed when the bottom of the battery pack 100 is subjected to the impact force, so as to buffer the impact force to protect the battery module 11 and the explosion-proof valve 3. The first sub-cavity 2223 is not in direct contact with the bottom protection plate component 21 and can be provided with cooling liquid to cool the battery module 11, and when the bottom of the battery pack 100 is impacted, the first sub-cavity 2223 will not be directly subjected to the force from the bottom protection plate component 21, the situation that the first sub-cavity 2223 is broken to cause the cooling liquid to overflow is not prone to occur, the battery module 11 is effectively cooled, and damage to a liquid cooling part can be well avoided.

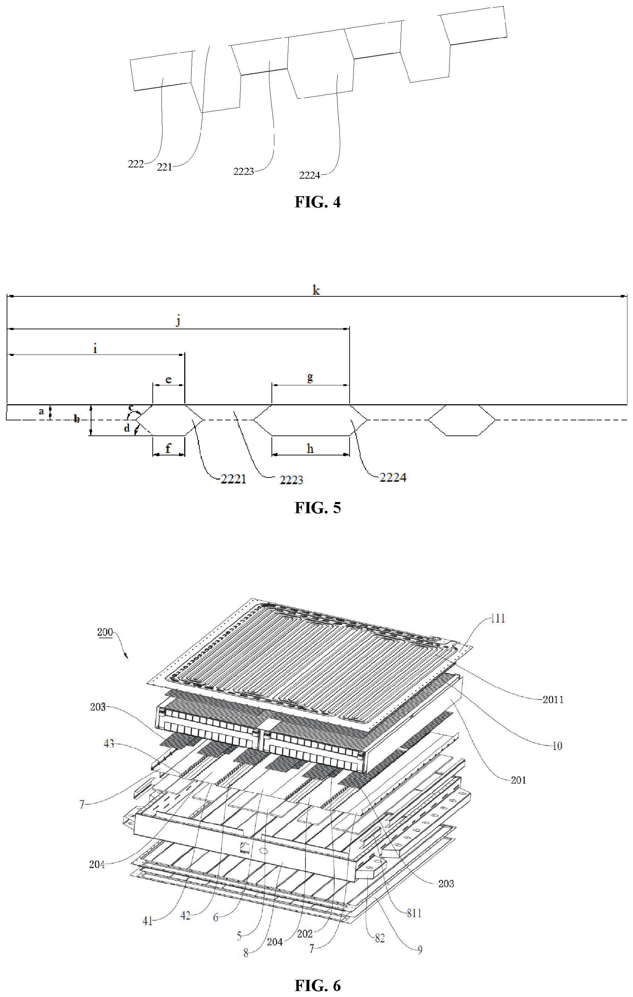

Exemplarily, as shown in FIGS. 1 to 4, the vertical depths of the second sub-cavity 2224 and the exhaust cavity 2221 are the same and both greater than the vertical depth of the first sub-cavity 2223. Upper surfaces of the second sub-cavity 2224, the exhaust cavity 2221 and the first sub-cavity 2223 are flush, and a lower surface of the second sub-cavity 2224 and a lower surface of the exhaust cavity 2221 both protrude downwards from a lower surface of the first sub-cavity 2223. During actual designing, as shown in FIG. 5, the vertical depth a of the first sub-cavity 2223 can be determined according to a bottom design space, and the vertical depth b of the second sub-cavity 2224 is 0.85 to 1.5 times that of a, and it can be designed as 1 time.

In some embodiments, side walls of the second sub-cavity 2224 and/or the exhaust cavity 2221 are configured as inclined reinforcing plates. That is, the side wall of the second sub-cavity 2224 is configured as the inclined reinforcing plate, and the side wall of the exhaust cavity 2221 can also be configured as the inclined reinforcing plate, so that a side wall of the first sub-cavity 2223 connected with the second sub-cavity 2224 or the exhaust cavity 2221 is also inclined. The adoption of the design of the inclined reinforcing plate can disperse the bottom impact force to further protect the battery module 11 and the explosion-proof valve 3, and meanwhile can achieve a buffer deformation effect.

Exemplarily, as shown in FIGS. 1 to 4, the side walls of the second sub-cavity 2224 and the exhaust cavity 2221 are both configured as the inclined reinforcing plates, and the reinforcing plates are inclined relative to a vertical direction, so that when the bottom of the battery pack 100 is subjected to the impact force, force transfer at the reinforcing plates is not in the vertical direction, the force is dispersed effectively, the impact force is prevented from acting on the battery module 11 vertically upwards, and therefore, the design of the reinforcing plates can enhance overall strength of the structure, disperse the impact force applied to the bottom, which achieves the buffer deformation effect, and then protects the battery module 11 and the explosion-proof valve 3.

Specifically, as shown in FIG. 5, a width e of an upper edge of the exhaust cavity 2221 can be determined according to a length of the explosion-proof valve 3, for example, it is 0.95 to 1.45 times the length of the explosion-proof valve 3, and a width f of a lower edge of the exhaust cavity 2221 can be the same as e; in addition, a width g of an upper edge of the second sub-cavity 2224 can be set to be 1.35 to 1.85 times the length of the explosion-proof valve 3, and a width h of a lower edge can be the same as g; and furthermore, i is 0.18 to 0.25 times a length of the cell, j is 0.35 to 0.55 times the length of the cell, and k is 0.70 to 0.85 times the length of the cell.

In some embodiments, the reinforcing plate includes an upper sub-plate and a lower sub-plate, an included angle is formed between the upper sub-plate and the lower sub-plate, and the included angle between the upper sub-plate and the vertical direction is the same as that between the lower sub-plate and the vertical direction. That is, the upper sub-plate and the lower sub-plate are symmetrically distributed relative to a horizontal plane, and as shown in FIGS. 4 and 5, two opposite side walls of the exhaust cavity 2221 or the second sub-cavity 2224 in a horizontal direction are configured as reinforcing plates, so that the exhaust cavity 2221 or the second sub-cavity 2224 is configured as a honeycomb hexagonal cavity.

As shown in FIGS. 4 and 5, the upper sub-plate and the lower sub-plate are both configured to be inclined relative to the vertical direction, and an end portion of a bottom wall of the first sub-cavity 2223 is connected with a joint of the upper sub-plate and the lower sub-plate, so that the three plates are spliced. Thus, when the bottom of the battery pack 100 is subjected to the impact force, a bottom wall of the exhaust cavity 2221 or the second sub-cavity 2224 transmits the impact force to the lower sub-plate, and the impact force is then transmitted upwards through the lower sub-plate along a direction inclined relative to the vertical direction, and then dispersed to the bottom wall of the first sub-cavity 2223 and the upper sub-plate through the lower sub-plate, so that the impact force is dispersed in different directions, and a bottom protection effect is improved. Specifically, during actual designing, as shown in FIG. 5, an inclination angle c of the upper sub-plate can be set to 35 to 55 degrees, and an inclination angle d of the lower sub-plate can be kept consistent with c.

**In** some embodiments, a buffer member 4 is arranged between a bottom of the first sub-cavities 2223 and/or the second sub-cavity 2224 and the bottom protection plate component 21. That is, the buffer member 4 is arranged between the first sub-cavity 2223 and the bottom protection plate component 21, the buffer member 4 can also be arranged between the second sub-cavity 2224 and the bottom protection plate component 21, and the buffer member 4 can be flexibly set according to a specific situation of the user in practical use. Therefore, by providing the buffer member 4, a buffer effect can be achieved between the first sub-cavity 2223 and the bottom protection plate component 21 and between the second sub-cavity 2224 and the bottom protection plate component 21. That is, when the bottom protection plate component 21 is subjected to the bottom impact force, the impact force can be transmitted to the buffer member 4 to be buffered and absorbed through elastic deformation of the buffer member 4, thereby avoiding that the first sub-cavity 2223 and the second sub-cavity 2224 are directly stressed and deformed, and improving safety of the explosion-proof valve protection member 22.

Exemplarily, as shown in FIGS. 1 to 2, the buffer member 4 is arranged at the bottom of the first sub-cavity 2223, the buffer member 4 is also arranged at the bottom of the second sub-cavity 2224, and the buffer members 4 are arranged to weaken vibration generated when a reaction occurs inside the battery pack 100, and also weaken vibration generated when the whole battery pack 100 is impacted by the external force, so as to improve the safety performance. The buffer members 4 can be configured to have a solid structure or a honeycomb structure, for example, the buffer members 4 can be made of MPP square micro-porous foam, MPP honeycomb foam, or the like.

In some embodiments, the functional cavity 2222 is provided with a buffer material or a cooling medium. That is, in an actual use process of the user, the functional cavity 2222 can be provided with the buffer material or the cooling medium, and the user can select the specific filling content according to needs or actual conditions, so that the flexible selection of the filling content increases use scenarios of the battery pack 100, and expands the application range of the battery pack 100.

It should be noted that if it is not necessary to fill the functional cavity 2222 with the buffer material or the cooling medium, the functional cavity 2222 can be designed as an empty cavity, and in short, whether the functional cavity 2222 is filled and the selection of the filling material are flexible, and the user only needs to make selection as needed during use.

In some embodiments, multiple battery modules 11 are provided, and multiple explosion-proof valve protection members 22 are provided and supported at the bottoms of the plural battery modules 11 in a one-to-one correspondence manner. Thus, the arrangement of the plurality of battery modules 11 is conducive to increasing a capacity of the battery pack 100, thereby prolonging the service life of the battery pack 100. Meanwhile, the plurality of explosion-proof valve protection members 22 are arranged to protect the bottoms of the plurality of battery modules 11 respectively, so that each battery module 11 can be protected and subjected to exhausting through the individual corresponding explosion-proof valve protection member 22, thus improving the bottom safety and exhaust reliability of each battery module 11.

A support member is connected between two adjacent explosion-proof valve protection members 22, and the support member can realize the connection of two adjacent explosion-proof valve protection members 22, so that the explosion-proof valve protection members 22 are taken as a whole when being mounted, which is beneficial to improving a mounting efficiency, and when the bottom impact force is received, force diffusion between the explosion-proof valve protection members 22 can be realized, local deformation is reduced, and the overall safety of the battery pack 100 is improved.

For example, as shown in FIGS. 1 and 2, the battery pack 100 can include two battery modules 11, and one explosion-proof valve protection member 22 is arranged at the bottom of each of the two battery modules 11. Meanwhile, one support member is connected between the two explosion-proof valve protection members 22, and a width of the support member is greater than a gap between the two battery modules 11 to enable end portions of the two battery modules 11 to be supported on the support member, so that the support member can support the two adjacent battery modules 11, and therefore, the support member can also serve as a box longitudinal beam to form middle support in the battery housing 1, thereby ensuring internal stability of the battery pack 100.

In some embodiments, a plurality of reinforcing cavities are formed in a side wall of the battery housing 1. In other words, the side wall of the battery housing 1 can be configured into a hollow structure, the reinforcing cavities are separated by reinforcing ribs, and therefore, when the bottom of the battery pack 100 is subjected to the impact force, the impact force can be absorbed by deformation of the reinforcing ribs towards the reinforcing cavities, thereby improving stability and reliability of the battery pack 100.

Meanwhile, it should be noted that the plurality of battery modules 11 are arranged in the battery housing 1, and the arrangement of the reinforcing cavities can reduce an overall weight of the battery pack 100, solving the problem that the overall weight of the battery pack 100 is excessively large due to the arrangement of the plurality of battery modules 11, and optimizing an overall performance of the battery pack 100.

A battery pack 200 according to an embodiment of the present disclosure is described below with reference to FIGS. 6 to 11, in which an explosion-proof valve 202 of the battery pack is arranged at a bottom of a battery module 201, an explosion-proof valve protection plate 204 is arranged at the bottom of the battery module 201, the explosion-proof valve protection plate 204 includes a support region 41 and an avoidance region 42, the support region 41 is connected with the battery module 201 to support the battery module 201, the avoidance region 42 is arranged directly opposite to the explosion-proof valve 202 to protect the explosion-proof valve 202, and meanwhile, the avoidance region 42 also provides a passage for gas discharging during thermal runaway of the battery module 201.

As shown in FIGS. 6 to 11, the battery pack 200 according to the embodiment of the present disclosure includes: a battery housing and a bottom protection plate assembly.

The battery module 201 is mounted in the battery housing, the bottom of the battery module 201 is provided with the explosion-proof valve 202, the battery housing can be made of a steel light material, the material is generally high-strength steel, such as HC340/590DP, HC420/780, and higher-strength steel, and is formed through a rolling process, and a whole weight is reduced. A side wall and the bottom protection plate assembly form an accommodating space, the battery module 201 can be arranged in the accommodating space, and specifically, when the explosion-proof valves 202 are arranged, the plurality of explosion-proof valves 202 are arranged at intervals at the bottom of the battery module 201, the explosion-proof valves 202 and the electrode can be arranged at the bottom of the battery module 201, or the explosion-proof valves 202 are arranged at the bottom of the battery module 201, the electrode is arranged on the other side of the battery module 201, and the explosion-proof valves 202 are arranged at a bottom of a cell of the battery module 201 and connected with the cell, so that the explosion-proof valves 202 discharge gas downwards, and heat-electricity separation can be realized.

Further, the bottom protection plate assembly includes a bottom protection plate component 9 and the explosion-proof valve protection plate 204, the bottom protection plate component 9 is connected to a bottom of the battery housing, the explosion-proof valve protection plate 204 is mounted on the bottom protection plate component 9, and when the explosion-proof valve protection plate 204 is designed, a region where the plurality of explosion-proof valves 202 at the bottom of the battery module 201 are located is protected, and the support region 41 of the explosion-proof valve protection plate 204 is suitable for being supported on a bottom wall of the battery module 201. That is, the explosion-proof valve protection plate 204 and the battery module 201 are connected and supported through the support region 41, the support region 41 of the explosion-proof valve protection plate 204 is bonded to the bottom of the battery module 201 through a structural adhesive 203, and the avoidance region 42 is arranged directly opposite to the explosion-proof valve 202.

At this point, the avoidance region 42 is arranged directly opposite to the explosion-proof valve 202 connected to the bottom of the battery module 201, and an avoidance space exists between the avoidance region 42 and the bottom of the battery module 201, so that a gas discharge passage can be formed in the avoidance space, and when a pressure of the battery module 201 increases, the explosion-proof valve 202 is opened, high-pressure gas can flow towards the gas discharge passage, and therefore, the explosion-proof valve 202 helps people to eliminate potential safety hazards, and an explosion of a new energy battery during use is well prevented.

Thus, the explosion-proof valve protection plate 204 in the embodiment of the present disclosure includes the support region 41 and the avoidance region 42, the support region 41 is connected with the battery module 201 to support the battery module 201, the avoidance region 42 is arranged directly opposite to the explosion-proof valve 202 to protect the explosion-proof valve 202, and meanwhile, the avoidance region 42 also provides the passage for gas discharging during thermal runaway of the battery module 201. In the embodiment of the present disclosure, the explosion-proof valve 202 is arranged downwards, and the explosion-proof valve 202 is sufficiently protected.

In some embodiments, the explosion-proof valve protection plate 204 is configured as a corrugated plate, the explosion-proof valve protection plate 204 is provided with a buffer groove in one side of the support region 41 facing the bottom protection plate component 9, and the explosion-proof valve protection plate 204 is provided with an avoidance groove in one side of the avoidance region 42 facing the battery module 201.

That is, the avoidance grooves are formed in the avoidance region 42, the avoidance grooves are the gas discharge passages of the explosion-proof valves 202, the buffer grooves and the avoidance grooves are distributed at intervals, opening directions of the buffer grooves and the avoidance grooves are opposite, multiple explosion-proof valves 202 are arranged at the bottom of the battery module 201 at intervals along a first direction of the battery module 201, and when the explosion-proof valves 202 and the electrodes are located on different sides, a length direction of the cell is perpendicular to a direction of the spaced distribution of the explosion-proof valves, the first direction is a direction of a width of the cell in the battery module 201, and a second direction is the length direction of the cell. The buffer grooves and the avoidance grooves of the corrugated plate are parallel and distributed at intervals, lengths of the avoidance grooves extend along the first direction of the explosion-proof valves 202 to protect the explosion-proof valves 202, and a surface of each buffer groove close to the battery module 201 is bonded to the battery module 201 through the structural adhesive 203.

When one side of each buffer groove facing away from the bottom protection plate component 9 is bonded to the battery module 201, two buffer grooves are distributed on two sides of each avoidance groove and connected with the battery module 201, so that two sides of each explosion-proof valve 202 can be protected, and the avoidance grooves of the explosion-proof valve protection plate 204 can protect the explosion-proof valves 202 in opposite directions of the explosion-proof valves 202.

In some embodiments, a side wall between the avoidance groove and the buffer groove is provided with an exhaust hole 43, the avoidance groove forms a first exhaust passage communicated with the explosion-proof valve 202, the buffer groove is provided therein with a second exhaust passage, and the second exhaust passage is communicated with the first exhaust passage through the exhaust hole 43.

Specifically, a plurality of exhaust holes 43 are provided, and the plurality of exhaust holes 43 are arranged at intervals and arrayed along the arrangement direction of each row of the explosion-proof valve 202. The side wall of the battery housing is provided with a pressure relief valve, and when the pressure of the battery module 201 rises, the explosion-proof valve 202 is opened, the high-pressure gas is discharged to the exhaust hole 43 when discharged to the first exhaust passage, the first exhaust passage is communicated with the exhaust hole 43, and the gas reaches the pressure relief valve through the first exhaust passage, and is discharged from the battery housing through the pressure relief valve, so as to protect the battery module 201.

In some embodiments, multiple support regions 41 and multiple avoidance regions 42 are provided, and the multiple support regions 41 and the multiple avoidance regions 42 are alternately distributed on the explosion-proof valve protection plate 204.

At this point, the plurality of support regions 41 and the plurality of avoidance regions 42 are arranged at intervals and parallel to each other, the explosion-proof valves 202 are arranged in a plurality of rows, a number of the explosion-proof valves 202 in each row is plural, and the plurality of the explosion-proof valves 202 in each row are all arranged directly opposite to the corresponding avoidance regions 42. By providing the plurality of support regions 41, a connection area between the battery module 201 and the explosion-proof valve protection plate 204 can be increased, so that reliability of the connection between the explosion-proof valve protection plate 204 and the battery module 201 can be enhanced. The plurality of explosion-proof valves 202 in each row can be avoided through the plurality of avoidance regions 42, so that the plurality of explosion-proof valves 202 connected to the battery module 201 can all be protected, and gas flow passages of the explosion-proof valves 202 are formed.

In some embodiments, a buffer member 5 is arranged in the buffer groove, so that when the explosion-proof valve protection plate 204 is subjected to an external impact, a buffer performance of the explosion-proof valve protection plate 204 can be improved, thereby improving a protection effect on the explosion-proof valve 202. The buffer member 5 is generally made of MPP square micro-porous foam, PP interlayers, or the like. The buffer member 5 can absorb energy and realize buffering, and when the bottom protection plate assembly is subjected to an external impact force, the impact force can be effectively absorbed through the integral bottom assembly, so as to protect the explosion-proof valve 202, thereby performing safety protection on the whole cell. The buffer member 5 is generally designed into a solid structure, a honeycomb structure, or the like, and has good bottom impact-resistant and energy-absorbing functions.

In some embodiments, the bottom protection plate assembly further includes a middle support member 6, at least two battery modules 201 are provided, at least two explosion-proof valve protection plates 204 are provided and mounted at the bottoms of the at least two battery modules 201 in a one-to-one correspondence manner, and the middle support member 6 is connected between adjacent explosion-proof valve protection plates 204.

In practice, when the plurality of battery modules 201 are provided, the middle support member 6 arranged between the adjacent battery modules 201 can achieve a reinforcing effect. In the battery pack 200, no beam is specifically provided between two adjacent battery modules 201, and the middle support member 6 at the bottoms of the two battery modules 201 is equivalent to the beam, thereby reinforcing the whole battery pack. Meanwhile, a size of the explosion-proof valve protection plate 204 is the same as that of the battery module 201, so that one explosion-proof valve protection plate 204 can protect all explosion-proof valves 202 at the bottom of the corresponding battery module 201.

Further, the middle support member 6 is arranged between the adjacent explosion-proof valve protection plates 204, the adjacent battery modules 201 are connected through the middle support member 6, and no explosion-proof valves 202 are arranged at regions above the middle support member 6, so that the middle support member 6 can be flush with surfaces of the buffer grooves connected with the battery modules 201. The middle support member 6 also has a same effect as the buffer groove, and a middle support groove of the middle support member 6 is formed after the middle support member 6 is connected with upper planes of the buffer grooves on two sides thereof. The middle support groove is also provided with a buffer member 5 which can achieve a buffer effect at the bottoms of the adjacent battery modules 201. The middle support member 6 serves as the beam, so that an anti-vibration performance at the adjacent battery modules 201 can be improved, thereby enhancing strength and an anti-vibration effect of the battery pack.

In some embodiments, end portions of the two adjacent battery modules 201 are arranged at intervals and respectively supported on two side edges of the middle support member 6.

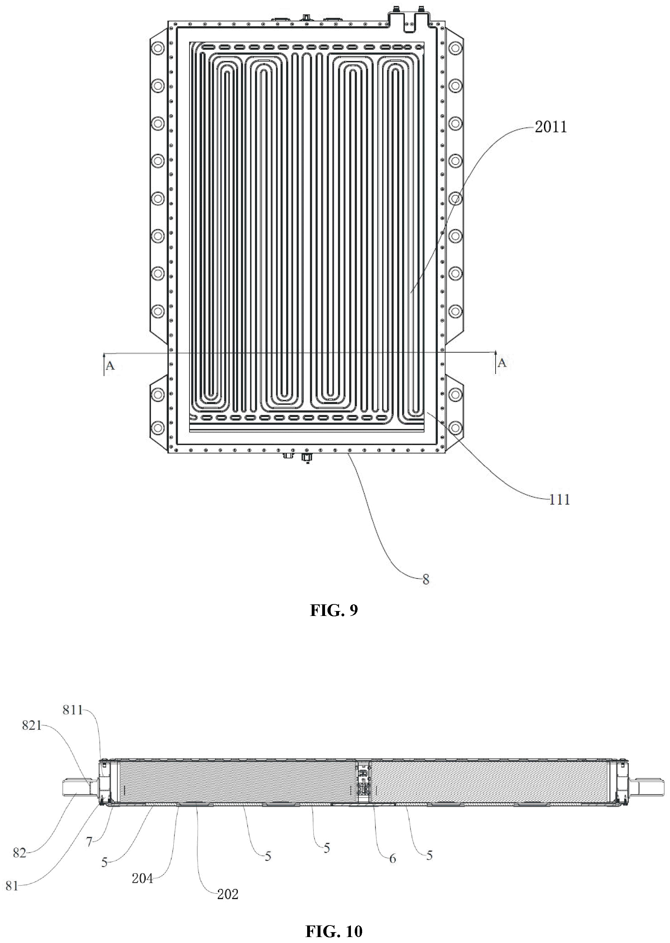

Referring to FIG. 10, that is, a distance between two adjacent battery modules 201 is smaller than a width of the middle support member 6, both ends of the middle support member 6 extend to the bottoms of the adjacent two battery modules 201, and the middle support member 6 can support and connect the bottoms of the adjacent battery modules 201 close to each other. The width of the middle support member 6 is greater than the distance of the adjacent battery modules 201, which equivalently means that a support effect and strength when the middle support member 6 serves as the beam are improved, thereby enhancing a protection effect on the whole battery pack and then improving a protection effect on the explosion-proof valve 202.

In some embodiments, the bottom protection plate assembly further includes a side support member 7, the side support member 7 includes a support plate 71 and a connecting plate 72 that are connected in a bent manner, the support plate 71 is supported at the bottom of the battery module 201, and the connecting plate 72 is located on a side part of the battery module 201 and connected with an inner side wall of the battery housing.

With reference to FIG. 6, the side support member 7 is configured into an L-shaped structure, the L-shaped structure includes the support plate 71 and the connecting plate 72, the side support member 7 is connected to an end of each explosion-proof valve protection plate 204 away from the middle support member 6, the side support member 7 is welded to the explosion-proof valve protection plate 204 and the battery housing, the connecting plate 72 of the side support member 7 protects and reinforces the side of the battery module 201, the support plate 71 supports the bottom of the battery module 201, and when a side wall of the battery pack is impacted, the side support member 7 has better protection and reinforcing effects on the battery module 201, and the battery module 201 is better protected, so as to better protect the explosion-proof valve 202.

Further, an inner side of the side support member 7 is provided with local reinforcing ribs, and the local reinforcing ribs are configured to protrude along inner corners of the L-shaped structure of the side support member 7. That is, the local reinforcing ribs can have a better reinforcing effect on the corners of the side support member 7, and at this point, corners of the battery module 201 can be better protected, and especially, when the corners with sides of the explosion-proof valve 202 are protected, the explosion-proof valve 202 can be better protected.

In some embodiments, a buffer cavity 81 is formed in the side wall of the battery housing, and a first reinforcing member 811 is arranged in the buffer cavity 81; and/or, a hollow reinforcing structure 82 is further arranged outside the battery housing, and a second reinforcing member 821 is arranged in the reinforcing structure 82.

In practice, the first reinforcing members 811 in the buffer cavity 81 can be configured into U shapes, two or more first reinforcing members 811 are provided, and if two first reinforcing members 811 are provided, U-shape openings of the two first reinforcing members 811 face one side of a bottom protection plate 91 or one side away from the bottom protection plate 91, and the two first reinforcing members 811 divide the buffer cavity 81 into a plurality of sub-cavities, which can increase strength of the buffer cavity 81, can make the buffer cavity 81 have a certain buffer effect when being impacted by the external force impact or vibrated, and meanwhile can reduce the weight of the battery pack.

Similarly, a hollow reinforcing structure 82 is arranged outside the battery housing, a connecting hole can be formed in the reinforcing structure 82, and the battery pack can be fixed at a fixed position by inserting a connecting member through the reinforcing structure 82. A second reinforcing member 821 is arranged in the reinforcing structure 82, the second reinforcing member 821 is also in a U shape, and a U-shape opening of the U-shaped second reinforcing member 821 faces the battery module 201, so that the U-shaped second reinforcing member 821 can support and reinforce the reinforcing structure 82, and overall rigidity of the battery housing is improved.

In some embodiments, the battery pack 200 according to the embodiment of the present disclosure further includes a liquid cooling plate 2011, wherein the liquid cooling plate 2011 is mounted at an upper portion of the battery housing and connected with the battery module 201, an annular reinforcing flange 111 is formed on the liquid cooling plate 2011, and the annular reinforcing flange 111 is connected with the battery housing.

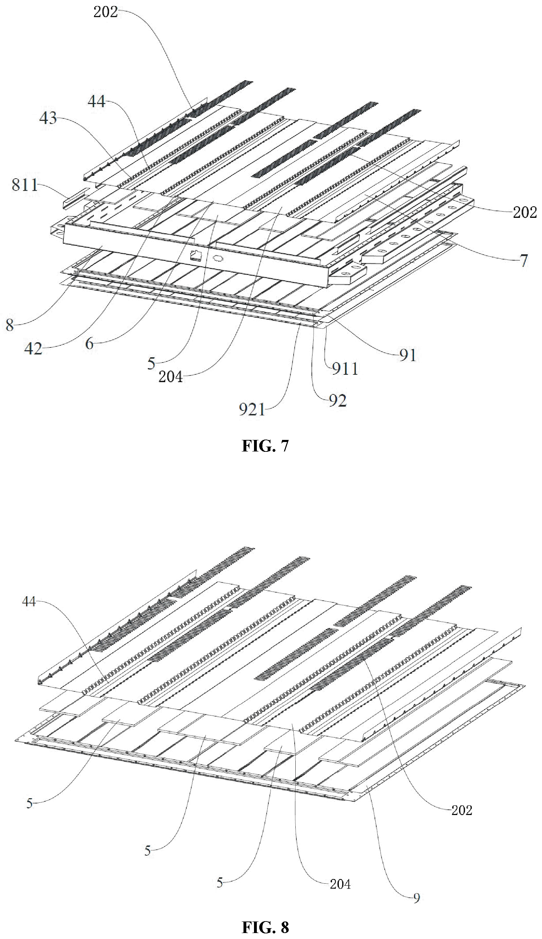

In practice, referring to FIGS. 6 and 8, the liquid cooling plate 2011 has the functions of cooling the battery cells, equalizing the temperature thereof, and providing support. A thermally conductive structural adhesive 10 bonds the liquid cooling plate 2011 to a surface of the battery module 201 facing away from the bottom protection plate component 9, and the thermally conductive structural adhesive 10 can provide heat conducting and connecting effects. The liquid cooling plate 2011 is connected with a box side wall 8 through bolts or welding, and the annular reinforcing flange 111 adopts the liquid cooling plate 2011, so as to improve the side electrode impact performance of the whole battery pack.

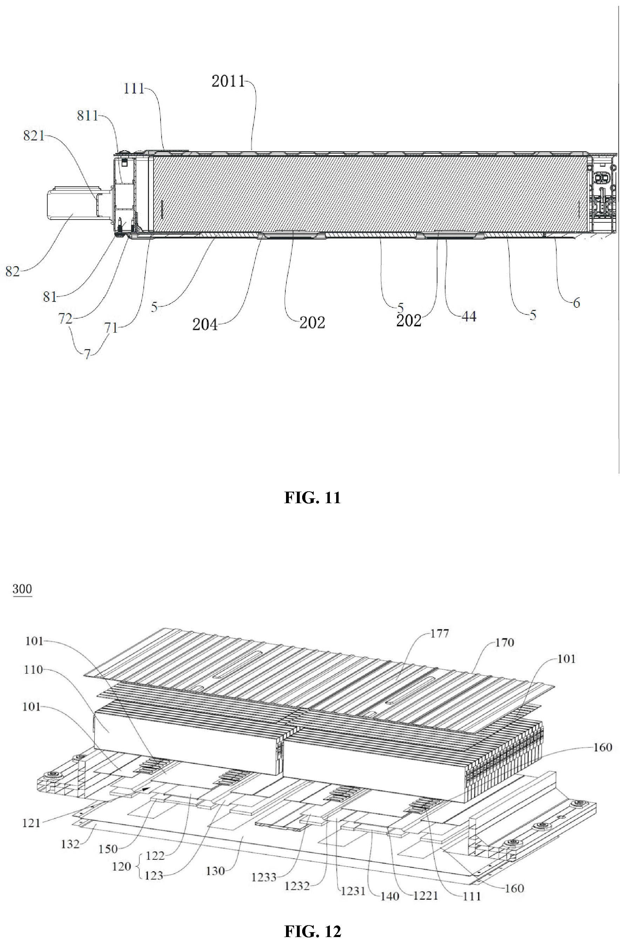

In addition, an insulation plate 44 is bonded on one side of the explosion-proof valve protection plate 204, and a position of the insulation plate 44 is arranged directly opposite to that of the explosion-proof valve 202. In the exploded view of the embodiment of the present disclosure, the positions of the insulation plate 44 and the explosion-proof valve 202 are not shown to be arranged directly opposite to each other, which is for ease of display and observation of the structures of the explosion-proof valve 202 and the insulation plate 44. In practice, the positions of the explosion-proof valve 202 and the insulation plate 44 are arranged directly opposite, as can be seen in the sectional view of FIG. 11. The insulation plate 44 is generally made of a mica sheet, a ceramic sheet, or the like, the explosion-proof valve protection plate 204 is a metal member, and since the insulation member is arranged directly opposite to the explosion-proof valve protection plate 204, arcing and a short circuit in thermal runaway can be prevented, and an insulating effect is achieved.

The battery pack 200 according to the embodiment of the present disclosure further includes the bottom protection plate 91, the bottom protection plate 91 is generally made of high-strength steel, such as HC340/590DP and higher-strength steel, or made of thermally-formed steel, or the like, the bottom protection plate 91 is connected with an inspection cover 92, the bottom protection plate 91 is provided with a bottom protection plate coating 911, the inspection cover 92 is provided with an inspection cover coating 921, and the battery housing can be protected from being corroded by influences of an external environment by arranging the bottom protection plate coating 911 and the inspection cover coating 921.

That is, the bottom protection plate component 9 includes the bottom protection plate 91, the inspection cover 92, the bottom protection plate coating 911, and the inspection cover coating 921, The bottom protection plate assembly includes the explosion-proof valve protection plate 204, the bottom protection plate component 9, the middle support member 6, the side support member 7, the insulation plate 44, the buffer member 5, or the like. In the battery pack 200 according to the embodiment of the present disclosure, the explosion-proof valve 202 is arranged downwards, and the bottom protection plate assembly greatly improves a vibration performance, a bottom protection performance, or the like, of the whole battery pack, and meanwhile provides the passage for gas discharge of the cell during thermal runaway. The overall structure is relatively light, a cost is low, a manufacturing process is simple, and a performance verification period of the battery pack can be shortened greatly.

A battery pack assembly 300 according to an embodiment of the present disclosure is described below with reference to FIGS. 12 to 16, and the battery pack assembly 300 includes: a cell 110, a support member 120 and a bottom protection plate 130, wherein an explosion-proof valve 111 is formed at a bottom end of the cell 110, a first exhaust passage 121 arranged directly opposite to the explosion-proof valve 111 is formed in the support member 120, the bottom protection plate 130 is arranged at one side of the support member 120 away from the cell 110 and fixedly connected with the support member 120, a second exhaust passage 131 is formed in one side of the bottom protection plate 130 facing the support member 120, and the first exhaust passage 121 is communicated with the second exhaust passage 131.

In the related art, a current battery pack generally adopts the arrangement form that a cell electrode and an explosion-proof valve are upward, or the arrangement form that the cell electrode faces one side or two sides, and the explosion-proof valve and the electrode are located on a same side, but the arrangement forms are not perfect enough in terms of improving overall energy density of the battery pack and preventing thermal runaway of the cell.

As shown in FIG. 12, specifically, the battery pack assembly 300 includes the cell 110, the support member 120 and the bottom protection plate 130, the explosion-proof valve 111 can be formed at a bottom end of the cell 110, the explosion-proof valve 111 can discharge gas inside the cell 110 when the cell 110 is subjected to thermal runaway, and one side or both sides of the cell 110 can be provided with a cell electrode(s). The support member 120 can be arranged at the bottom end of the cell 110, the support member 120 can be configured to support the cell 110, and the support member 120 and the cell 110 can be fixed by bonding. The support member 120 can be provided with the first exhaust passage 121, the first exhaust passage 121 can be arranged directly opposite to the explosion-proof valve 111, and the first exhaust passage 121 can be configured to exhaust the gas by the explosion-proof valve 111.

The bottom protection plate 130 can be arranged at one side of the support member 120 away from the cell 110, the bottom protection plate 130 and the support member 120 are fixedly bonded, the second exhaust passage 131 is formed in one side of the bottom protection plate 130 facing the support member 120, and the second exhaust passage 131 can be communicated with the first exhaust passage 121, so that during thermal runaway of the cell 110, the explosion-proof valve 111 can exhaust the gas, and the gas can be discharged through the first exhaust passage 121 and the second exhaust passage 131, thereby ensuring a safety performance of the cell 110, and reducing the risk of runaway of the cell 110.

In short, the battery pack assembly 300 according to the present disclosure includes the first exhaust passage 121 and the second exhaust passage 131, so that when the cell 110 is subjected to thermal runaway, the explosion-proof valve 111 can timely exhaust the gas in the cell 110, and the exhausted gas can sequentially pass through the first exhaust passage 121 and the second exhaust passage 131 to be discharged outside, thereby effectively reducing a temperature and a pressure in the battery pack assembly 300, ensuring a safety performance of the battery pack assembly 300, and reducing the risk of runaway of the battery pack assembly 300.

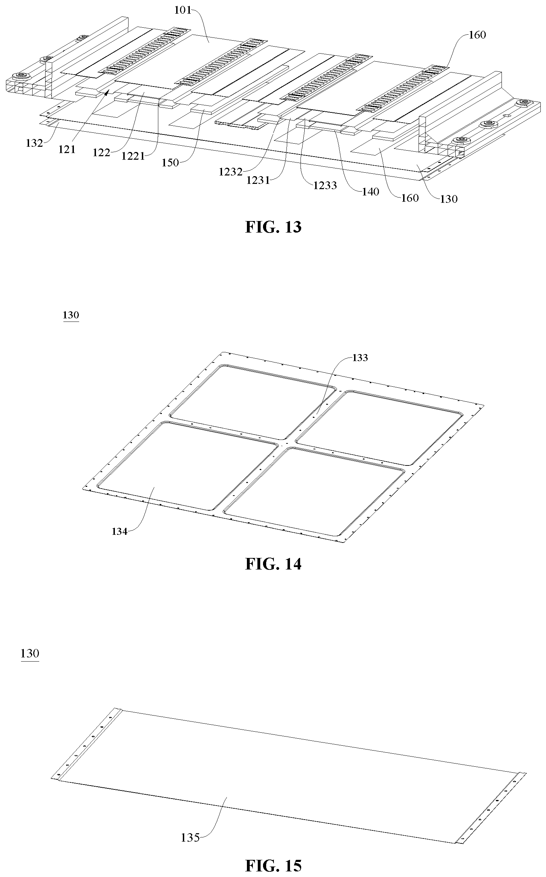

As shown in FIGS. 12 and 13, in some embodiments of the present disclosure, the support member 120 includes a first support portion 122 and a second support portion 123, the first support portion 122 can be arranged directly opposite to the cell 110 to support the cell 110, an adhesive layer 101 is formed between the first support portion 122 and the cell 110, and the first support portion 122 and the cell 110 can be fixedly bonded by the adhesive layer 101. The first support portion 122 can be made of aluminum, steel, and materials with same performance, so as to improve structural strength of the first support portion 122. Two sides of the first support portion 122 in a first reverse direction are further provided with extension portions 1221, the extension portions 1221 extend away from the first support portion 122, one side of each extension portion 1221 facing the bottom protection plate 130 is provided with the adhesive layer 101, and the extension portions 1221 and the bottom protection plate 130 can be fixedly bonded by the adhesive layers 101.

The second support portion 123 can be arranged directly opposite to the explosion-proof valve 111, and the first exhaust passage 121 can be formed in the second support portion 123. Multiple first support portions 122 and multiple second support portions 123 can be provided and arranged in a cross manner, the first support portions 122 and the second support portions 123 can be fixedly connected, and the second support portions 123 can be made of aluminum, steel, composite materials, or the like, so as to improve structural strength of the second support portions 123.

As shown in FIGS. 12 and 13, in some embodiments of the present disclosure, the second support portion 123 includes a bottom plate 1231, side plates 1232 and an overlapping edge 1233, the bottom plate 1231 can be arranged on one side of the second support portion 123 away from the cell 110, the side plates 1232 can be arranged on two sides of the bottom plate 1231 in a first direction, the side plates 1232 extend away from the bottom plate 1231, the overlapping edge can be arranged at a free end of the side plates 1232, wherein two overlapping edges 1233 respectively extend in opposite directions. The overlapping edge 1233 can be fixedly connected to the first support portion 122, and the bottom plate 1231, the side plates 1232, and the overlapping edge 1233 can define the first exhaust passage 121. A cavity formed between the bottom plate 1231 and the side plates 1232 can also have a buffer energy absorbing function, so that when the bottom protection plate 130 is subjected to an external impact force, the structure can effectively absorb impact energy, so as to protect the explosion-proof valve 111.

As shown in FIGS. 12 and 13, in some embodiments of the present disclosure, the battery pack assembly 300 further includes a first buffer member 140 and a second buffer member 150, the first buffer member 140 and the second buffer member 150 are respectively located between the bottom protection plate 130 and the support member 120, and the first buffer member 140 and the second buffer member 150 are respectively fixedly connected with the bottom protection plate 130 and the support member 120. The first buffer member 140 can be arranged directly opposite to the first support portion 122, the second buffer member 150 can be arranged directly opposite to the overlapping edge 1233, the first buffer member 140 and the second buffer member 150 can be made of MPP square micro-porous foam, MPP honeycomb foam, or the like, and the first buffer member 140 and the second buffer member 150 can be constructed in a solid structure, a honeycomb structure, or the like, so that the first buffer member 140 and the second buffer member 150 have good bottom impact resistance and energy absorption functions, and when the bottom protection plate 130 is subjected to the external impact force, the first buffer member 140 and the second buffer member 150 can effectively absorb energy generated by the impact, so as to protect the explosion-proof valve 111 and perform safety protection on the whole cell 110.

As shown in FIGS. 12 and 13, in some embodiments of the present disclosure, multiple cells 110 can be provided, multiple explosion-proof valves 111 can be provided and in one-to-one correspondence with the multiple cells 110, and the multiple explosion-proof valves 111 can be arranged at intervals in a second direction. The second direction is orthogonal to the first direction, and the first exhaust passage 121 can extend in the second direction, so as to ensure that during thermal runaway of the cell 110, the explosion-proof valve 111 can exhaust the gas to the first exhaust passage 121 more quickly.

As shown in FIGS. 14 and 15, in some embodiments of the present disclosure, the bottom protection plate 130 can be made of high-strength steel, such as HC340/590DP and higher-strength steel, or made of thermally-formed steel, or the like, so as to improve overall strength of the bottom protection plate 130 and an impact resisting performance of the bottom protection plate 130. A bottom end of the bottom protection plate 130 is further provided with a bottom protection plate coating 132, and the bottom protection plate coating 132 has the functions of improving a structure, resisting acid and alkali liquid, resisting fire and resisting abrasion. The bottom protection plate 130 is provided with a mounting beam 133, the mounting beam 133 divides the bottom protection plate 130 into a plurality of mounting grooves 134, and in a specific implementation, four mounting grooves 134 can be provided. Specifically, the mounting groove 134 can be configured to accommodate the support member 120, a bottom wall 135 of the mounting groove 134 can adopt a flat plate structure, and the second exhaust passage 131 is formed between the bottom wall 135 and the support member 120.

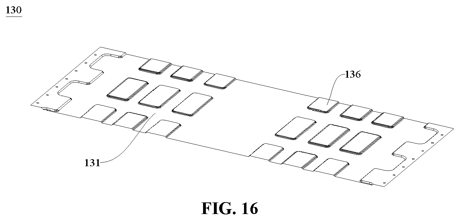

As shown in FIG. 16, in some embodiments of the present disclosure, a plurality of reinforcing ribs 136 protruding towards the support member 120 can be formed in the mounting grooves 134, the plurality of reinforcing ribs 136 are respectively arranged at intervals in the first direction and the second direction, the reinforcing ribs 136 can divide the second exhaust passage 131 into transverse exhaust passages and longitudinal exhaust passages, and the transverse exhaust passages and the longitudinal exhaust passages are distributed alternately, so as to ensure that during runaway of the cell 110, the high temperature gas can be rapidly discharged through the explosion-proof valve 111, thus reducing a temperature, a pressure, or the like, of the entire battery pack assembly 300, and further reducing the risk of runaway of the battery pack assembly 300.

As shown in FIGS. 12 and 13, in some embodiments of the present disclosure, the battery pack assembly 300 further includes an insulation member 160, the insulation member 160 can be arranged between the second support portion 123 and the cell 110, the insulation member 160 can be fixedly bonded to the second support portion 123, the insulation member 160 can further be arranged at the explosion-proof valve 111, and the insulation member 160 can be made of a mica sheet, a ceramic sheet, or the like, so as to prevent a short circuit between an anode and a cathode of the cell 110, thereby improving an output efficiency of the cell 110 and prolonging a service life of the cell 110.

As shown in FIG. 12, in some embodiments of the present disclosure, the battery pack assembly 300 further includes a liquid cooling plate 170, the liquid cooling plate 170 is arranged at a top end of the cell 110, and the liquid cooling plate 170 can be fixedly connected to the cell 110. In a specific implementation, the liquid cooling plate 170 is fixed to the cell 110 by an adhesive, a flow channel 171 suitable for the flow of cooling liquid can be formed on the liquid cooling plate 170, the liquid cooling plate 170 can cool the cell 110, and fixing of the liquid cooling plate 170 to the top end of the cell 110 by the adhesive can improve a heat conduction effect of the cooling liquid.

A power unit according to the present disclosure is briefly described below.

The power unit according to the present disclosure is provided with the battery pack assembly 300 according to the above embodiment. Since the power unit according to the present disclosure is provided with the battery pack assembly 300 according to the above embodiment, when the cell 110 is subjected to thermal runaway in the power unit, the explosion-proof valve 111 can timely exhaust the gas in the battery pack assembly 300, and the exhausted gas can sequentially pass through the first exhaust passage 121 and the second exhaust passage 131 to be discharged outside, thereby effectively reducing the pressure in the battery pack assembly 300, reducing the risk of runaway of the battery pack assembly 300, and ensuring the safety performances of the battery pack assembly 300 and the power unit.

Although embodiments of the present disclosure have been shown and illustrated, it shall be understood by those skilled in the art that various changes, modifications, alternatives and variants can be made to these embodiments without departing from the principle and idea of the present disclosure. The scope of the present disclosure is defined by the claims and equivalents thereof.

## Claims

1. A battery pack, comprising:
a battery housing, wherein a battery module is mounted in the battery housing, and a bottom of the battery module is provided with an explosion-proof valve; and
a bottom protection plate assembly, wherein the bottom protection plate assembly comprises a bottom protection plate component and an explosion-proof valve protection member, the bottom protection plate component is connected to a bottom of the battery housing, the explosion-proof valve protection member is supported between the bottom protection plate component and the battery module, the explosion-proof valve protection member is provided with a hollow cavity and an exhaust hole, the exhaust hole is arranged directly opposite to the explosion-proof valve, the exhaust hole is communicated with at least a part of the hollow cavity, and at least a part of the hollow cavity is adapted to communicate with an external space of the battery pack.

2. The battery pack according to claim 1, wherein the hollow cavity comprises an exhaust cavity and a functional cavity, the exhaust hole is formed in a top wall of the exhaust cavity, the exhaust cavity is adapted to communicate with the external space of the battery pack, and the functional cavity and the exhaust cavity are configured in a such way that side walls are connected and inner cavities are separated.

3. The battery pack according to claim 2, wherein the functional cavity comprises at least two first sub-cavities and a second sub-cavity, the second sub-cavity is located between the adjacent first sub-cavities, and the first sub-cavities are connected with the exhaust cavity.

4. The battery pack according to claim 3, wherein a vertical depth in the first sub-cavities is smaller than a vertical depth in the second sub-cavity, and/or the vertical depth of the second sub-cavity is the same as a vertical depth in the exhaust cavity.

5. The battery pack according to claim 3, wherein side walls of the second sub-cavity and/or the exhaust cavity are configured as inclined reinforcing plates.

6. The battery pack according to claim 5, wherein the reinforcing plate comprises an upper sub-plate and a lower sub-plate, an included angle is formed between the upper sub-plate and the lower sub-plate, and an included angle between the upper sub-plate and a vertical direction is the same as an included angle between the lower sub-plate and a vertical direction.

7. The battery pack according to claim 3, wherein a buffer member is arranged between a bottom of the first sub-cavities and/or the second sub-cavity and the bottom protection plate component.

8. The battery pack according to claim 2, wherein the functional cavity is provided with a buffer material or a cooling medium.

9. The battery pack according to claim 1, wherein multiple battery modules are provided, multiple explosion-proof valve protection members are provided and supported at bottoms of the plural battery modules in a one-to-one correspondence manner, and a support member is connected between two adjacent explosion-proof valve protection members.

10. The battery pack according to claim 1, wherein a plurality of reinforcing cavities are formed in a side wall of the battery housing.

11. A battery pack, comprising:
a battery housing, wherein a battery module is mounted in the battery housing, and a bottom of the battery module is provided with an explosion-proof valve; and
a bottom protection plate assembly, wherein the bottom protection plate assembly comprises a bottom protection plate component and an explosion-proof valve protection plate, the bottom protection plate component is connected to a bottom of the battery housing, the explosion-proof valve protection plate is mounted on the bottom protection plate component, the explosion-proof valve protection plate comprises a support region and an avoidance region, the support region is suitable for supporting a bottom wall of the battery module, and the avoidance region is arranged directly opposite to the explosion-proof valve.

12. The battery pack according to claim 11, wherein the explosion-proof valve protection plate is configured as a corrugated plate, the explosion-proof valve protection plate is provided with a buffer groove in one side of the support region facing the bottom protection plate component, and the explosion-proof valve protection plate is provided with an avoidance groove in one side of the avoidance region facing the battery module.

13. The battery pack according to claim 12, wherein a side wall between the avoidance groove and the buffer groove is provided with an exhaust hole, the avoidance groove forms a first exhaust passage communicated with the explosion-proof valve, the buffer groove is provided therein with a second exhaust passage, and the second exhaust passage is communicated with the first exhaust passage through the exhaust hole.

14. The battery pack according to claim 12, wherein multiple support regions and multiple avoidance regions are provided, and the multiple support regions and the multiple avoidance regions are alternately distributed on the explosion-proof valve protection plate.

15. The battery pack according to claim 12, wherein the buffer groove is provided therein with a buffer member.

16. The battery pack according to claim 11, wherein the bottom protection plate assembly further comprises a middle support member, at least two battery modules are provided, at least two explosion-proof valve protection plates are provided and mounted at bottoms of the at least two battery modules in a one-to-one correspondence manner, and the middle support member is connected between the adjacent explosion-proof valve protection plates.

17. The battery pack according to claim 16, wherein end portions of the two adjacent battery modules are spaced apart and respectively supported on two side edges of the middle support member.

18. The battery pack according to claim 11, wherein the bottom protection plate assembly further comprises a side support member, the side support member comprises a support plate and a connecting plate that are connected in a bent manner, the support plate is supported at the bottom of the battery module, and the connecting plate is located on a side part of the battery module and connected with an inner side wall of the battery housing.

19. The battery pack according to claim 11, wherein a buffer cavity is formed in a side wall of the battery housing, and a first reinforcing member is arranged in the buffer cavity; and/or
a hollow reinforcing structure is further arranged outside the battery housing, and a second reinforcing member is arranged in the reinforcing structure.

20. The battery pack according to claim 11, further comprising a liquid cooling plate, wherein the liquid cooling plate is mounted at an upper portion of the battery housing and connected with the battery module, an annular reinforcing flange is formed on the liquid cooling plate, and the annular reinforcing flange is connected with the battery housing.

21. A battery pack assembly, comprising:
a cell, wherein an explosion-proof valve is formed at a bottom end of the cell;
a support member, wherein a first exhaust passage arranged directly opposite to the explosion-proof valve is formed in the support member; and
a bottom protection plate, wherein the bottom protection plate is arranged at one side of the support member away from the cell and fixedly connected with the support member, a second exhaust passage is formed in one side of the bottom protection plate facing the support member, and the first exhaust passage is communicated with the second exhaust passage.

22. The battery pack assembly according to claim 21, wherein the support member comprises:
a first support portion, wherein the first support portion is arranged directly opposite to the cell and fixedly connected with the cell; and
a second support portion, wherein the second support portion is arranged directly opposite to the explosion-proof valve and fixedly connected with the first support portion, wherein the first exhaust passage is formed in the second support portion.

23. The battery pack assembly according to claim 22, wherein the second support portion comprises:
a bottom plate;
side plates, wherein the side plates are arranged on two sides of the bottom plate in a first direction and extend in a direction away from the bottom plate; and
an overlapping edge, wherein the overlapping edge is arranged at a free end of the side plates and extends in a direction of the side plates away from each other, the overlapping edge is fixedly connected with the first support portion, and the bottom plate, the side plates, and the overlapping edge define the first exhaust passage.

24. The battery pack assembly according to claim 23, further comprising: a first buffer member and a second buffer member, wherein the first buffer member and the second buffer member are respectively located between the bottom protection plate and the support member, and fixedly connected with the bottom protection plate and the support member, the first buffer member is arranged directly opposite to the first support portion, and the second buffer member is arranged directly opposite to the overlapping edge.

25. The battery pack assembly according to claim 24, wherein multiple cells are provided, the explosion-proof valve of the multiple cells is arranged at intervals in a second direction, the second direction is orthogonal to the first direction, and the first exhaust passage extends in the second direction.

26. The battery pack assembly according to claim 25, wherein the bottom protection plate is provided with a plurality of mounting grooves, the mounting grooves are adapted to accommodate the support member, and the second exhaust passage is formed between a bottom wall of the mounting grooves and the support member.

27. The battery pack assembly according to claim 26, wherein reinforcing ribs protruding towards the support member are formed in the mounting grooves, and multiple reinforcing ribs are provided and arranged at intervals in the first direction and the second direction respectively.

28. The battery pack assembly according to claim 27, further comprising: an insulation member, wherein the insulation member is arranged between the second support portion and the cells and fixedly bonded to the second support portion.

29. The battery pack assembly according to claim 21, further comprising: a liquid cooling plate, wherein the liquid cooling plate is arranged at a top end of the cells and fixedly connected with the cells, and a flow channel suitable for flow of cooling liquid is formed in the liquid cooling plate.

30. A power unit, comprising the battery pack assembly according to any one of claims 21 to 29.
